# FASCICULE DE BREVET EUROPEEN

(11) **EP 0 881 888 B1**
(45) Date de publication et mention de la délivrance du brevet: **20.08.2003**
(21) Numéro de dépôt: 97906224.7
(22) Date de dépôt: 19.02.1997
(51) Int. Cl.: A23L 3/36, A23B 7/04

(54) **DISPOSITIF DE PRE-REFROIDISSEMENT POUR TUNNEL DE SURGELATION DE PRODUITS ALIMENTAIRES**
VORKÜHLUNGSVORRICHTUNG FÜR NAHRUNGSMITTEL-GEFRIERTUNNEL
PRECOOLER DEVICE FOR A FOOD FREEZING TUNNEL

(30) Priorité: 20.02.1996 FR 9602295
(43) Date de publication de la demande: 09.12.1998
(73) Titulaire: DEW, Roger, 75016 Paris (FR)
(72) Inventeur: DEW, Roger, 75016 Paris (FR)
(74) Mandataire: Roman, Michel
(86) Numéro de dépôt international: FR9700307
(87) Numéro de publication internationale: WO97030603

(56) Documents cités:
- WO-A-94/02037
- FR-A- 2 380 744
- FR-A- 2 712 075
- GB-A- 2 039 015
- US-A- 1 953 521
- US-A- 3 805 538
- US-A- 4 409 744

## Description

La présente invention a pour objet un dispositif de pré-refroidissement pour tunnel de surgélation de produits alimentaires, ainsi que les produits ainsi obtenus.

Il peut convenir pour tous les types de produits susceptibles d'être surgelés, mais est surtout destiné au traitement des produits en vrac, et en particulier de légumes frais ou préparés tels que petits pois ou haricots verts, par exemple.

Dans le domaine de la conservation des aliments par le froid, lorsqu'on descend au-dessous de 0 °C, on parle de congélation, qui peut être ordinaire ou lente, aboutissant à des produits congelés, ou rapide et profonde, aboutissant à des produits surgelés qui, à la décongélation reprendront leur aspect initial.
La surgélation des produits alimentaires s'effectue le plus souvent en continu dans des tunnels réfrigérés, où ces produits effectuent un parcours plus ou moins élaboré sur un ou plusieurs convoyeurs à bande. Les produits frais ou préparés comportent une proportion importante d'eau qui, en gelant durant le processus de refroidissement, a tendance à provoquer une adhérence sur les bandes transporteuses, nécessitant un système de raclage risquant de détériorer le produit. En outre, la sublimation de l'eau congelée est responsable d'une certaine déshydratation entraînant une perte de poids des aliments traités et provoquant le givrage des évaporateurs des machines frigorifiques.

Certaines installations comportent un système de pré-refroidissement, parmi lesquelles on peut citer :
- Le brevet GB 2 039 015 qui décrit un procédé et un dispositif de surgélation en continu et en deux étapes. Dans une première étape, les produits en vrac sont soumis à un pré-refroidissement par un système à lit fluidisé, puis à une surgélation dans un tunnel sur un convoyeur. Le pré-refroidissement s'effectue dans l'enceinte du tunnel de surgélation.
- Le document US 3 805 538 concerne un procédé de surgélation de portions individuelles de produits alimentaires et en particulier de fruits. Ce procédé utilise un dispositif comportant un convoyeur à bande destiné au croûtage des produits à surgeler au moyen de liquide cryogénique, et un tunnel de surgélation proprement dit.
- Le brevet N° WO 94/02 037, déposé par l'auteur de la présente invention, décrit une installation et un procédé pour la surgélation de produits alimentaires à l'aide d'un tunnel de surgélation comprenant un tapis sans fin présentant une structure hélicoïdale, le procédé étant caractérisé en ce que les produits à surgeler sont refroidis, avant d'être déposés sur le tapis sans fin, par un ensemble de réfrigération disposé à proximité de l'orifice d'introduction du tunnel et comportant au moins une plaque réfrigérante sur laquelle défile un matériau souple, rectiligne, en feuille, supportant le produit à refroidir.
   Cette installation permet de réaliser avec une excellente hygiène la surgélation de produits alimentaires en évitant leur déformation en cours de surgélation. Toutefois, en raison de sa conception en deux entités distinctes et de la présence de la plaque réfrigérante, elle s'avère encombrante et d'un prix de revient élevé.

L'invention a pour but de remédier à ces inconvénients. Elle permet en effet de réaliser un ensemble de surgélation en continu de type tunnel, dans lequel il est procédé au refroidissement de la surface extérieure des produits à traiter avant leur surgélation à coeur, ce qui permet d'éviter leur déformation au cours du processus et les pertes de poids par déshydratation, ainsi que de réduire sensiblement l'accumulation de givre sur les évaporateurs du tunnel, l'équipement selon l'invention étant cependant d'un encombrement identique à celui d'un tunnel de surgélation habituel, et d'un coût de fabrication très compétitif.

Il est constitué d'un tunnel de surgélation en continu équipé soit d'un ou de plusieurs convoyeurs à bandes, soit d'un système de courant d'air ascendant dénommé "lit fluidisé", et comportant en partie supérieure, à l'intérieur de l'enceinte refroidie, un dispositif de pré-refroidissement constitué d'un film souple non réutilisable défilant sur un support horizontal fixe, en sens inverse de celui du convoyeur à bande ou du lit fluidisé situé au-dessous, l'ensemble étant agencé pour que les produits à surgeler soient préalablement refroidis sur ce film de manière à provoquer une croûte de glace à leur surface, avant d'être surgelés sur le ou les convoyeurs à bande ou par le lit fluidisé.

Sur les dessins annexés, donnés à titre d'exemple non limitatif d'une des formes de réalisation de l'objet de l'invention:
la figure 1 représente le tunnel de réfrigération à convoyeurs vu en coupe verticale longitudinale
et la figure 2 est une coupe transversale suivant les flèches A-A de la figure précédente.

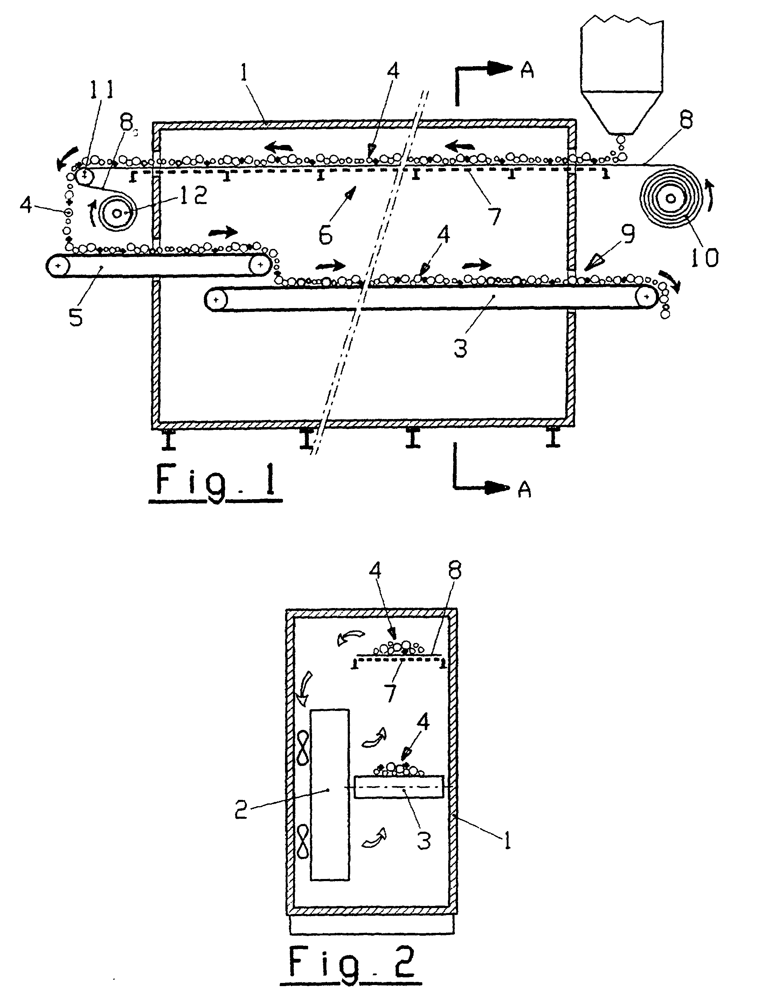

Le dispositif, figures 1 et 2, consiste en un système mécanique de refroidissement en deux temps, qui refroidit d'abord la surface à basse température, puis refroidit à coeur à une température plus élevée. Il est constitué d'un tunnel 1 de surgélation de structure classique refroidi par un évaporateur 2 interne et comportant un ou plusieurs tapis sans fin 3 longitudinaux destinés à supporter les produits 4 à surgeler, ainsi qu'éventuellement un convoyeur de chargement 5 à bande.

Le tapis sans fin 3 est surmonté d'un ensemble de refroidissement 6 disposé à l'intérieur de l'enceinte du tunnel 1 et constitué d'un support horizontal 7 sur lequel un film souple 8, se déplace en sens inverse du déplacement du tapis sans fin 3. Cet ensemble de refroidissement a essentiellement pour but de glacer le produit à surgeler, au moins sur sa face inférieure, afin de réaliser un croûtage du produit 4, ce dernier étant ensuite déposé sur le convoyeur de chargement 5 et surgelé à coeur sur le tapis sans fin 3 qui le conduit à la sortie 9 du tunnel 1.
L'ensemble de refroidissement 6 pourra aussi bien être intégré au tunnel de surgélation 1 lors de sa fabrication, qu'être conçu pour être adapté à un tunnel existant.

Le support 7 sera de préférence constitué d'une tôle métallique plane, éventuellement perforée, ou d'un ensemble de tôles métalliques disposées sur un même plan, mais pourra être formé de tout autre dispositif assurant un défilement correct du film souple 8, par exemple une piste glacée ou une série de rouleaux cylindriques libres.

Le film 8 est à usage unique, c'est-à-dire qu'il n'est pas réutilisable, ce qui garantit une hygiène optimale dans toute la chaîne de froid et notamment sur le tapis sans fin 3 puisque les produits 4 à surgeler sont préalablement "croûtés" sur la surface d'un film non réutilisée. Ledit film est issu d'une bobine débitrice 10 disposée à une extrémité du tunnel 1, puis traverse longitudinalement ce dernier avant d'être enroulé sur une bobine réceptrice 11, un ou plusieurs rouleaux 11 assurant le guidage. La vitesse de défilement sera avantageusement réglable et afin de l'adapter à la vitesse d'avancement du tapis sans fin 3, en particulier lorsque l'ensemble de refroidissement 6 doit être monté dans un tunnel de surgélation existant.
Le film 8 peut être en papier, en matière plastique, en métal tel que l'aluminium ou constituer une combinaison de plusieurs de ces matériaux.

Dans l'exemple représenté, l'ensemble de refroidissement 6 est agencé pour que les produits refroidis sur le film 8 tombent directement sur le convoyeur à bande 5, ou sur un tapis sans fin 3 en cas d'absence de convoyeur de chargement, mais, selon la configuration du système, un mécanisme de transfert intermédiaire peut être prévu entre l'ensemble de refroidissement 6 et ledit tapis sans fin, étant entendu que le produit à surgeler déposé devra être dans des conditions de température telles qu'il ne "colle" pas au tapis sans fin lors de sa surgélation.

Le système selon l'invention évite la déformation du produit traité, les marques de courroie, et la perte de poids du produit est presque éliminée. Par comparaison avec le système cryogénique, cette surgélation mécanique peut être réalisée à pratiquement un dixième du prix.
Du fait que le produit 4 déposé sur le tapis sans fin 3 comporte un croûte de surface, il n'est pas susceptible de coller au tapis sans fin 3 lors de la surgélation et peut ainsi se déplacer sur ledit tapis sans fin sans se déformer. En outre, les phénomènes d'évaporation de l'eau contenue dans le produit à surgeler sont diminués, ce qui permet de réduire l'accumulation de givre sur les évaporateurs 2 du tunnel 1.
Enfin, la croûte de surface étant obtenue alors que les produits 4 à surgeler reposent sur une feuille de matériau non réutilisée, une excellente hygiène du produit est garantie dans toute la chaîne de surgélation.

Le positionnement des divers éléments constitutifs donne à l'objet de l'invention un maximum d'effets utiles qui n'avaient pas été, à ce jour, obtenus par des dispositifs similaires.

## Revendications

1. Dispositif de pré-refroidissement pour tunnel de surgélation de produits alimentaires, utilisable pour tous les types de produits susceptibles d'être surgelés, et en particulier pour les produits en vrac tels que légumes frais ou préparés,
**caractérisé par** la combinaison d'un film souple (8) non réutilisable issu d'une bobine débitrice (10) disposée à une extrémité d'un tunnel de surgélation (1) en continu, traversant longitudinalement ce dernier avant d'être enroulé sur une bobine réceptrice (11), ledit film souple défilant sur un support horizontal (7) disposé à l'intérieur de l'enceinte refroidie dudit tunnel de surgélation, l'ensemble étant agencé de manière à ce que les produits (4) à surgeler soient refroidis sur ce film de façon à provoquer une croûte de glace sur leur surface avant qu'ils ne soient surgelés à coeur.

2. Dispositif de pré-refroidissement selon la revendication 1, se caractérisant par le fait que le tunnel de surgélation (1) est équipé d'un ou de plusieurs convoyeurs à bandes (3, 5), le défilement du film souple (8) s'effectuant en sens inverse de celui du convoyeur à bande (3) situé au-dessous.

3. Dispositif de pré-refroidissement selon la revendication 1, se caractérisant par le fait que le tunnel de surgélation (1) est équipé d'un système de convoyage à courant d'air ascendant de type nommé "lit fluidisé", le défilement du film souple (8) s'effectuant en sens inverse de celui des produits (4) dans ledit "lit fluidisé".

4. Dispositif de pré-refroidissement selon l'une quelconque des revendications précédentes, se caractérisant par le fait que le support (7) est constitué d'une tôle métallique plane perforée ou d'un ensemble de tôles métalliques perforées disposées sur un même plan.

5. Dispositif de pré-refroidissement selon l'une quelconque des revendications 1 à 3, se caractérisant par le fait que le support (7) est constitué d'une piste glacée.

6. Dispositif de pré-refroidissement selon l'une quelconque des revendications précédentes, constitué d'un film souple (8) non réutilisable défilant sur un support horizontal (7) disposé à l'intérieur de l'enceinte refroidie, se caractérisant par le fait qu'il est conçu pour être monté dans un tunnel existant et que sa vitesse de défilement est réglable.

7. Tunnel de surgélation en continu du type à convoyeurs sans fin à bandes, **caractérisé en ce qu'**il comporte, en partie supérieure, à l'intérieur de l'enceinte refroidie, un dispositif de pré-refroidissement conforme à l'une quelconque des revendications précédentes.

## Patentansprüche

1. Vorrichtung zum Vorkühlen für Lebensmittel in Gefriertunneln,
geeignet für alle Arten von Tiefkühlprodukten, insbesondere für lose Waren, wie frische oder vorbereitete Gemüse,
**gekennzeichnet durch** die Kombination aus einer nicht wiederverwendbaren, flexiblen Folie (8), die von einer, an einem Ende eines kontinuierlich arbeitenden Gefriertunnels (1) installierten Abrolltrommel (10) abgewickelt wird, diesen Tunnel in Längsrichtung durchläuft und anschließend auf einer Aufrolltrommel (11) aufgewickelt wird, und in dem die flexible Folie auf einer horizontalen Unterlage (7) im Innenraum der Kühlkammer des genannten Gefriertunnels vorwärts gleitet, die gesamte Baueinheit ist so gestaltet, dass die zu gefrierenden Produkte (4) auf der Folie gekühlt werden, so dass sich auf ihrer Oberfläche eine Eiskruste bildet bevor sie völlig durchgefroren werden.

2. Vorrichtung zum Vorkühlen gemäß Anspruch 1, **gekennzeichnet dadurch, dass** der Kühltunnel (1) mit einem oder mehreren Transportbändern (3, 5) ausgerüstet ist und sich die flexible Folie (8) in bezug auf das darüber liegende Transportband (3) in die entgegengesetzter Richtung bewegt.

3. Vorrichtung zum Vorkühlen gemäß Anspruch 1, **gekennzeichnet dadurch, dass** der Gefriertunnel (1) ein auf einer senkrecht aufsteigenden Luftströmung beruhendes Transportsystem in Art eines "Wirbelbettes" besitzt und die flexible Folie (8) in diesem Wirbelbett in die entgegengesetzte Richtung wie das Produkt (4) läuft.

4. Vorrichtung zum Vorkühlen gemäß einem der vorstehenden Ansprüche, **gekennzeichnet dadurch, dass** die Unterlage (7) aus einer planen metallischen Lochplatte oder mehreren auf der gleichen Ebene angeordneten metallischen Lochplatten besteht.

5. Vorrichtung zur Vorkühlen gemäß einem der vorstehenden Ansprüche 1 bis 3, **gekennzeichnet dadurch, dass** die Unterlage (7) aus einer vereisten Bahn besteht.

6. Vorrichtung zur Vorkühlen gemäß einem der vorstehenden Ansprüche, bestehend aus einer nicht wiederverwendbaren flexiblen Folie (8), die sich auf einer horizontalen Unterlage (7) im Innern einer Kühlkammer fortbewegt, **gekennzeichnet dadurch, dass** sie zum nachträglichen Einbau in einen vorhandenen Tunnel konzipiert ist und die Foliengeschwindigkeit einstellbar ist.

7. Kontinuierlich arbeitender Gefriertunnel mit Endlos-Transportbändern, **gekennzeichnet dadurch, dass** er im Innern der Kühlkammer, im oberen Bereich, eine Vorrichtung zum Vorkühlen gemäß einem der vorstehenden Ansprüche besitzt.

## Claims

1. Pre-cooling system for equipping a tunnel for deep freezing foodstuffs, capable of being used with all the types of products that may be frozen, and in particular loose products such as fresh or prepared vegetables,
**characterized by** the combination of a no reusable flexible film (8) drawn from a supply reel (10) arranged at one end of a continuous deep freezing tunnel (1), longitudinally crossing the latter before being rolled on a receiving reel (11), the aforementioned flexible film being drawn out over horizontal support (7) arranged inside the cooled enclosure of the aforesaid deep freezing tunnel, the assembly being arranged so that products (4) to be frozen are cooled on this film in order to cause a crust of ice to form on their surface before their core is frozen.

2. Pre-cooling system according to claim 1, **characterized in that** deep freezing tunnel (1) is equipped with one or several belt conveyors (3, 5), flexible film (8) being drawn out in the opposite direction to that of the belt conveyor (3) located below it.

3. Pre-cooling system according to claim 1, **characterized in that** deep-freezing tunnel (1) is equipped with a convoying system with ascending air draught of the so-called "fluidized bed" type, flexible film (8) being drawn out in the opposite direction to the movement of the products (4) in the aforementioned "fluidized bed".

4. Pre-cooling system according to any of the preceding claims, **characterized in that** support (7) consists of a flat perforated metal sheet or an assembly of perforated metal sheets laid out on the same plane.

5. Pre-cooling system according to any one of claims 1 to 3, **characterized in that** support (7) consists of an iced track.

6. Pre-cooling system according to any of the preceding claims, consisting of a non-reusable flexible film (8) drawn over a horizontal support (7) arranged inside the cooled enclosure, **characterized in that** it is designed to be assembled in an existing tunnel and that its forward speed can be adjusted.

7. Continuous deep freezing tunnel of the continuous conveyor type, **characterized in that** it includes, in the upper part, inside the cooled enclosure, a pre-cooling system conforming to any one of the preceding claims.
